(19) Europäisches Patentamt
European Patent Office
Office européen des brevets

(11) Veröffentlichungsnummer: **0 150 442**
**B1**

(12) # EUROPÄISCHE PATENTSCHRIFT

(45) Veröffentlichungstag der Patentschrift: **15.02.89**

(51) Int. Cl.⁴: **C 01 B 33/18**, C 01 B 33/187, C 01 B 33/32

(21) Anmeldenummer: **84115780.3**

(22) Anmeldetag: **19.12.84**

(54) **Kristalline Kieselsäure, ihre Salze und Verfahren zu ihrer Herstellung.**

(30) Priorität: **04.01.84 DE 3400130**

(43) Veröffentlichungstag der Anmeldung: **07.08.85 Patentblatt 85/32**

(45) Bekanntmachung des Hinweises auf die Patenterteilung: **15.02.89 Patentblatt 89/7**

(84) Benannte Vertragsstaaten: **BE CH DE FR GB IT LI NL SE**

(56) Entgegenhaltungen:
**DE-A-2 743 143**
**DE-B-2 742 912**
**DE-C-1 041 930**
**US-A-4 061 724**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Dr. Rieck, Hans- Peter, Staufenstrasse 13a, D-6238 Hofheim am Taunus (DE)**

**EP 0 150 442 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die Erfindung betrifft eine neue kristalline Kieselsäure mit Schichtstruktur, ihr neues kristallines Natriumsalz und Verfahren zur Herstellung dieser Verbindungen in wäßrigem Medium.

Neben amorphen Kieselsäuren sind auch einige kristalline Kieselsäuren bekannt. Dabei kann man zwischen Kieselsäuren mit Gerüststruktur und Kieselsäuren mit Schichtstruktur unterscheiden. Zu den Kieselsäuren mit Gerüststruktur können solche Zeolithe in ihrer Wasserstoff-Form gezählt werden, die frei von Aluminium oder zumindest sehr arm an Aluminium sind. Hierzu gehören der Silicalit (US-PS-4 061 724) als sehr aluminiumarmar Vertreter des Zeolith ZSM-5 oder dealuminierte Zeolithe vom Faujasit- oder Mordenit-Typ.

Man kennt weiterhin einige schichtförmige Kieselsäuren, deren Alkalisalze in der Natur gefunden worden sind (H.P. Eugster, Science, 157, 1177 - 1180; T. P. Rooney et al., Amer. Mineral., 54, 1034 - 1043 (1969); G. Maglione und M. Servant, C. R. Acad. Sci., Ser. D., 277, 1721 - 1724 (1973); J. L. McAtee, Jr. et al., Amer. Mineral., 53 (1968), 2061 - 2069). Diese Salze können auch synthetisch erhalten werden (L. McCulloch, J. Amer. Chem. Soc. 74, 2453 - 2456 (1952); G. Lagaly, K. Benecke und A. Weiss, Proc. Int. Clay Conf., Madrid 1972, 663 - 673 (1973), R. K. Iler, J. Colloid Sci. 19, 648 - 657 (1964), DE-PS-2 742 912, G. Lagaly et al., Z. Naturforsch. 28b, 234 -238 (1973), Z. Naturforsch. 34b, 666 - 674 (1979), K. Beneke and G. Lagaly, Amer. Mineral., 68 (1983) 818 - 826.

Aus den Alkalisilikaten können die freien Kieselsäuren durch sauren Ionenaustausch gewonnen werden. Dabei bleibt die Schichtstruktur der Verbindung erhalten. Charakteristisch für diesen Typ von Kieselsäure bzw. Silikaten ist ihr Vermögen, Gastmoleküle zwischen die Schichten des kristallinen, hydratisierten Siliziumdioxids einzubauen. Aus dem Röntgenbeugungsdiagramm kann dabei eine Aufweitung der Schichten abgeleitet werden.

Die in der DE-PS-2 742 912 beschriebene Kieselsäure mit Schichtstruktur kann in reiner Form oder in Form ihrer Einlagerungsverbindungen als Adsorptionsmittel verwendet werden.

Es bestand die Aufgabe, ein Verfahren zu finden, mit dem auf einfache Weise aus leicht zugänglichen Ausgangsprodukten ähnliche Kieselsäuren und Alkali-Schichtsilikate hergestellt werden können. Das Verfahren sollte bei kurzen Reaktionszeiten von maximal 2 Tagen durchgeführt werden können, um eine kostengünstige industrielle Herstellung zu ermöglichen. Es sollte weiterhin zu einem Produkt führen, das möglichst frei von Quarz und amorphen Anteilen ist.

Die vorliegende Erfindung löst diese Aufgabe. Sie betrifft ein Verfahren zur Herstellung eines kristallinen Natriumsilikats mit Schichtstruktur und einer Ionenaustausch-Kapazität von 83 bis 130 mmol $Na^+/mol\ SiO_2$, das dadurch gekennzeichnet ist, daß man eine wäßrige Natriumsilikat enthaltende Reaktionsmischung mit einem molaren Verhältnis von $SiO_2/Na_2O$ von 3,9 : 1 bis 15 : 1 und einem Molverhältnis $H_2O/(Na_2O + SiO_2)$ von 3 : 1 bis 80 : 1 bereitet, die 0,01 bis 30 Gew.-% an Impfkristallen des gewünschten kristallinen Natriumsilikats, bezogen auf den $SiO_2$-Anteil der eingesetzten Reaktionsmischung, enthält, sie auf Temperaturen von 160 bis 250°C aufheizt, man die Reaktion mindestens solange durchgeführt, daß bis eine abgesaugte und bei 120°C getrocknete Probe im Röntgenbeugungsdiagramm ein Verhältnis der Intensität des Reflexes bei dem Netzebenenabstand $d_1 = (20 \pm 2) \cdot 10^{-8}$ cm zu der Intensität des gegebenenfalls vorhandenen Reflexes bei dem Netzebenenabstand $d_2 = (15,5 \pm 1,5) \cdot 10^{-8}$ cm von mindestens 3 : 1 aufweist und man die Reaktion beendet, bevor die Intensität des Reflexes bei dem Netzebenenabstand $d_3 = (3,34 \pm 0,04) \cdot 10^{-8}$ cm die Intensität des Reflexes bei dem Netzebenenabstand $d_4 = (3,44 \pm 0,04) \cdot 10^{-8}$ cm erreicht oder überschreitet.

Als Ausgangsprodukte kommen Gemische von Natriumhydroxid und gefällter Kieselsäure, Kieselgel oder Kieselsol in Frage. Bevorzugt ist jedoch der Einsatz von Natronwassergläsern, insbesondere von Wassergläsern mit 21 bis 30 Gew.-% $SiO_2$ und 5 bis 10 Gew.-% $Na_2O$. Diese Wassergläser sind preiswert, lassen sich gut handhaben und zeigen eine hohe Reaktivität.

Es kann dabei erforderlich sein, das Verhältnis $SiO_2/Na_2O$ durch Zugabe einer sauren Verbindung zu erhöhen. Der so neutralisierte Anteil leistet keinen Beitrag mehr für das Verhältnis $SiO_2/Na_2O$.

Die Reaktionsdauer hängt stark von der Reaktionstemperatur ab. Sie kann bei Temperaturen zwischen 200 und 250°C weniger als 1 Stunde, aber auch (bei niedrigeren Temperaturen und niedrigem Verhältnis von $SiO_2/Na_2O$) bis zu 48 Stunden betragen. Die Reaktionsdauer kann für die gewählte Reaktionstemperatur ermittelt werden, indem während der Umsetzung zu verschiedenen Zeitpunkten Proben entnommen werden, die röntgenographisch untersucht werden. Dies geschieht bevorzugt zunächst an einem kleinen Modellansatz. Die Reflexe bei den Netzebenenabständen $d_1$ und $d_4$ gehen auf das gewünschte Natriumsilikat mit Schichtstruktur (I) zurück. Ihre Intensität (d. h. der Anteil des erzeugten kristallinen Natriumsilikats im Produktgemisch) soll daher möglichst hoch sein. Der Reflex bei dem Netzebenenabstand $d_2$ wird dann nicht beobachtet, wenn von vornherein geeignete Reaktionsbedingungen gewählt werden. In diesem Fall ist das Verhältnis der Intensitäten der Reflexe bei $d_1$ und $d_2$ wesentlich höher als 3. Der Reflex bei $d_2$ wird beobachtet, wenn als Zwischenprodukt Magadiit gebildet wird. Magadiit ist unter den Verfahrensbedingungen jedoch nicht stabil, so daß die Intensität von $d_2$ ein Maximum durchlaufen kann. Die Reaktionszeit wird vorteilhafterweise so sehr verlängert, daß bei $d_2$ kein Reflex mehr auftritt. Ein gleiches Ergebnis kann auch durch Erhöhung der Temperatur bei gleicher Reaktionsdauer erreicht werden. Die Intensität des Reflexes bei dem Netzebenenabstand $d_3$ geht bei langer Reaktionszeit zum Teil auf Quarz (scharfe Spitze im Spektrum), zum meist größeren Teil auf das gewünschte Silikat (verwaschenes Maximum im Spektrum) zurück.

Das molare Verhältnis $SiO_2/Na_2O$ (nicht neutralisiert) beträgt vorzugsweise 5 : 1 bis 10 : 1. Das molare Verhältnis $H_2O/(Na_2O + SiO_2)$ beträgt vorzugsweise 8 : 1 bis 40 : 1. Die Reaktionstemperatur beträgt vorzugsweise 175 bis 230°C, insbesondere 180 bis 210°C.

Neben den Natriumionen können zusätzlich auch andere Metallionen bei der Synthese anwesend sein, beispielsweise Germanium, Aluminium, Indium, Arsen und Antimon sowie des Nichtmetalle Phosphor und Bor. Sofern die Menge dieser Bestandteile, bezogen auf den Natriumgehalt, kleiner als 10 % ist, wird die Synthese nur unwesentlich beeinflußt. Zur Herstellung eines reinen Natriumschichtsilikates (I), bzw. der freien Säure (II), ist es vorteilhaft, auf die Zugabe von Fremdmetallen bei der Synthese zu verzichten. Reine Schichtsilikate mit einem anderen Kation als Alkali (Ia) lassen sich leicht in einem weiteren Schritt aus dem Natriumsalz (I) durch Ionenaustausch bzw. aus der entsprechenden freien Säure (II) durch Neutralisation gewinnen.

Größere Anteile an Aluminium in Ausgangsgemisch können zur Bildung von zeolithischen Nebenprodukten, meist vom ZSM-5-Typ oder vom Mordenit-Typ, führen. Ein geringer Aluminiumgehalt, wie er beispielsweise in technischem Wasserglas vorhanden ist, stört dagegen nicht.

Wegen des bei der Reaktion auftretenden hohen Wasserdampf-Partialdruckes wird die Umsetzung in einem Druckgefäß, vorzugsweise unter Rühren, durchgeführt. Die Zugabe von Impfkristallen ist wesentlich. Jedoch entsteht das gleiche Silikat (mit verminderter Reinheit) bei längeren Reaktionszeiten auch ohne Einsatz von Impfkristallen.

Die Menge an Impfkristallen beträgt bei diskontinuierlicher Reaktionsführung vorzugsweise 0,5 - 10 Gew.-%, bezogen auf den $SiO_2$-Anteil der eingesetzten Reaktionsmischung. Impfkristallzusätze unter 0,01 Gew.-% haben keinen erkennbaren Effekt mehr. Anstatt Impfkristalle zuzusetzen, kann es auch ausreichend sein, wenn geringe Reste von einem früheren Ansatz im Reaktionsgefäß verbleiben. Bei kontinuierlicher Reaktionsführung haben sich auch höhere Konzentrationen an Kristallkeimen (im stationären Gleichgewicht) als vorteilhaft erwiesen. Der Zusatz der Impfkristalle begünstigt die Reinheit des Produktes und verkürzt die Reaktionszeit erheblich.

Das erfindungsgemäße Verfahren kann diskontinuierlich, halbkontinuierlich und kontinuierlich in Apparaten mit Strömungsrohr-, Rührkessel- oder Kaskadencharakteristik durchgeführt werden. Es bietet gegenüber den bekannten Verfahren den Vorteil einer sehr kurzen Reaktionszeit und führt gleichzeitig zu einer sehr guten Produktqualität. Rasterelektronenmikroskopische Aufnahmen zeigen, daß Produkte, die nach dem erfindungsgemäßen Verfahren hergestellt werden, weder amorphe noch quarzhaltige Bestandteile enthalten.

Das nach dem erfindungsgemäßen Verfahren erhaltene kristalline Natriumsalz (I), welches Na-SKS-1 (Natriumsalz der Schichtkieselsäure 1) genannt wird, weist Schichtstruktur auf, zeigt im Röntgenbeugungsdiagramm zumindest eine sehr starke Linie bei $(3{,}42 \pm 0{,}15) \cdot 10^{-8}$ cm und besitzt ein Atomverhältnis Natrium/Silicium von 0,083 bis 0,13. Dies entspricht einer Bruttoformel $Na_2\,Si_x\,O_{2x+1}$, wobei x eine Zahl zwischen 15 und 24 darstellt.

Das erhaltene Natriumsalz (I) verhält sich wie ein Kationenaustauscher. Die Austauschkapazität liegt (nach Umrechnung auf das wasserfreie Produkt) im Bereich von 132 bis 203 mmol Natrium/100 g und insbesondere im Bereich von 132 bis 173 mmol/100 g. Sie wird bestimmt durch Titration des Natriumsalzes mit Säure sowie Rücktitration der erhaltenen Säure mit Lauge. Die gleiche Meßmethodik liefert für einen synthetischen Magadiit (als Testsubstanz) das literaturbekannte Na/Si-Verhältnis. Die Breite der angegebenen Bereiche wird zum Teil durch die Reproduzierbarkeit, zum Teil durch geringe Mengen von Nebenprodukten im kristallinen Natriumsilikat bedingt.

Es wird angenommen, daß das reine Produkt (I) eine Austauschkapazität von 145 mmol Natrium/100 g aufweist und die Idealzusammensetzung $Na_2Si_{22}O_{45}$ besitzt.

Das Röntgenspektrum des Natriumsalzes (I) ähnelt - wie sich aus Tabelle 2 ergibt - den Spektren von Kenyait, von $SiO_2$-X (Heydemann, Beitr. Min. Petrog. <u>10</u>, 242 - 259 (1964)), von "$SiO_2$ ($X_2$-Phase)", einem Silikat einer Hochdruck-Synthese mit sehr geringem Austauschvermögen (B. Mitsyuk et al., Geochem. Int. <u>13</u>, 202 (1976)) und von $K_2Si_8O_{17} \cdot xH_2O$ (DE-PS-2 742 912). Man kann daraus entnehmen, daß bei den Alkalischichtsilikaten $Na_2Si_{22}O_{45} \cdot xH_2O$ (Kenyait), $SiO_2$-X, $SiO_2$ ($X_2$-Phase), $K_2SiO_{17} \cdot xH_2O$ und Na-SKS-1 strukturelle Ähnlichkeiten vorhanden sein müssen und man kann alle aufgeführten Schichtsilikate als Kenyaitartige Silikate bezüglich ihres Röntgenbeugungsdiagramms auffassen. Auf die starke Ähnlichkeit zwischen $SiO_2$-X und $K_2Si_8O_{17} \cdot xH_2O$ bzw. der entsprechenden freien Säure weisen Benecke und Lagaly hin (Z. Naturforsch. <u>34b</u>, 648 - 649 (1979)). Auch die elementaranalytische Zusammensetzung von Na-SKS-1 zeigt eine Verwandtschaft des erfindungsgemäßen Natriumsalzes mit dem Mineral Kenyait. Deutliche Unterschiede zeigen sich jedoch im Titrationsverhalten mit Säuren. Während Na-SKS-1 ein Ionenaustauschvermögen von 83 - 130 mmol $Na^+$/mol $SiO_2$ hat und mit einer etwa äquivalenten Menge Salzsäure in die freie Säure (H-SKS-1) überführt werden kann, wird das Mineral Kenyait mit verdünnter Säure zu 6 $SiO_2 \cdot H_2O$ mit einem entsprechenden (theoretischen) Ionenaustauschvermögen der Säure von 333 mmol $H^+$/mol $SiO_2$ umgesetzt. Dieses hydratisierte $SiO_2$ unterscheidet sich jedoch nicht nur in seinem Ionenaustauschvermögen, sondern in seinem Röntgenbeugungsdiagramm eindeutig von der im vorliegenden Fall gebildeten freien Kieselsäure H-SKS-1 mit Schichtstruktur. Dieses unterschiedliche Verhalten gegenüber Säuren zeigt, daß das von Eugster gefundene natürliche Natrium-Schichtsilikat Kenyait nicht identisch mit Na-SKS-1 ist.

Gemäß DE-PS-2 742 912 hat $K_2Si_8O_{17} \cdot xH_2O$ ein Austauschvermögen von 250 mmol $K^+$/mol $SiO_2$. Für $SiO_2$ ($X_2$-Phase) wird in der Literatur eine Austauschkapazität von 100 - 130 mg $Na^+$/100 g $SiO_2$-$X_2$ angegeben. Das entspricht rechnerisch einer Austauschkapazität von etwa 62 - 81 mmol $Na^+$/mol $SiO_2$. Diese Gegenüberstellung zeigt, daß zusätzlich zu den wesentlichen Reflexen im Röntgenbeugungsdiagramm auch die Angaben zur Ionenaustauschkapazität zur eindeutigen Charakterisierung einer kristallinen Kieselsäure notwendig sind.

Die anderen kristallinen Alkalimetallsalze (Ia) der Kieselsäure mit Schichtstruktur, beispielsweise das Kalium- und das Lithiumsalz, weisen ebenfalls eine sehr starke Linie bei $(3{,}42 \pm 0{,}15) \cdot 10^{-8}$ cm auf und besitzen ein

Atomverhältnis von Alkalimetall/Silizium von 0,083 bis 0,13. Sie lassen sich aus dem Natriumsalz (I) durch Ionenaustausch oder aus der freien Kieselsäure (II) mit Schichtstruktur durch Neutralisation mit Alkalihydroxid erhalten.

Zur Gewinnung der freien kristallinen Kieselsäure H-SKS-1 (II) arbeitet man am besten mit verdünnten wäßrigen Mineralsäuren. Für eine vollständige Umsetzung muß die Menge an Protonen mindestens äquimolar der Menge der zu entfernenden Alkaliionen sein. Bevorzugt ist die Anwendung von überschüssiger Säure. Es ist insbesondere vorteilhaft, das aufzuarbeitende Alkalisilikat (I) portionsweise mit Säure zu versetzen, die Alkaliionen enthaltende Reaktionslösung vom Rückstand abzutrennen und dieses Verfahren mehrmals zu wiederholen. Um die Zeit für einen vollständigen Ionenaustausch zu verkürzen, empfiehlt es sich, die Reaktionsmischung zu rühren. Dabei ist es vorteilhaft, wenn der pH-Wert bei der Umsetzung etwa 2,0 erreicht.

Die gebildete Kieselsäure H-SKS-1 kann abfiltriert und, falls erforderlich, getrocknet werden, z. B. im Trockenschrank bei 140°C. Eine Trocknung ist nicht erforderlich, wenn die Säure weiterverarbeitet werden soll, z. B. in das Kaliumsalz überführt werden soll.

Die nach dem erfindungsgemäßen Verfahren erhaltene kristalline Kieselsäure H-SKS-1 ist neu. Sie weist die Bruttoformel $H_2Si_xO_{2x+1}$ auf, wobei x eine Zahl zwischen 15 und 24 ist. In dieser Formel ist ein möglicher Wassergehalt nicht berücksichtigt. Die frisch hergestellte kristalline Kieselsäure enthält vor der Trocknung ca. 10 bis 60 Gew.-% Wasser. Beim Trocknen nimmt dieser Wassergehalt kontinuierlich ab und strebt schließlich gegen 0 %. Die kristalline Kieselsäure zeichnet sich aus durch eine sehr starke erste Linie im Rontgenbeugungsdiagramm bei $d = (3{,}42 \pm 0{,}1) \cdot 10^{-8}$ cm sowie durch eine weitere Linie bei $d = (18 \pm 4) \cdot 10^{-8}$ cm deren Intensität höchstens 75 % der Intensität der ersten Linie beträgt. Sie weist ferner eine titrierbare Acidität von 83 bis 130 mmol $H^+$/mol $SiO_2$ auf, die mit der angegebenen Strukturformel in Einklang ist. Meist liegt die beobachtete Acidität im Bereich von 83 bis 105 mmol $H^+$/mol $SiO_2$.

Das Röntgenbeugungsdiagramm der neuen kristallinen Kieselsäure H-SKS-1 ist linienarm. Von amorpher Kieselsäure unterscheidet sich das Produkt eindeutig durch die breite intensive Linie bei einem Netzebenenabstand von etwa $3{,}42 \cdot 10^{-8}$ cm. Nach Literaturangaben sind Linien im Bereich von $(3{,}2$ bis $3{,}6) \cdot 10^{-8}$ cm und $(11$ bis $21) \cdot 10^{-8}$ cm typisch für Kieselsäuren mit Schichtstruktur. Es wird daher angenommen, daß auch die erfindungsgemäße Kieselsäure eine schichtförmige Kristallstruktur aufweist. Einige Röntgenreflexe, insbesondere der Reflex bei $d = (18 \pm 4) \cdot 10^{-8}$ cm, sind in ihrer Intensität abhängig vom Wassergehalt der Kieselsäure. Es ist jedoch ein charakteristisches Kennzeichen, daß die Intensität des Reflexes bei $d = (18 \pm 4) \cdot 10^{-8}$ cm maximal 75 % der des Reflexes bei etwa $3{,}42 \cdot 10^{-8}$ cm beträgt. Die neue Kieselsäure läßt sich von den bekannten kristallinen Kieselsäuren durch ihr Röntgenbeugungsdiagramm und/oder ihr spezifisches Ionenaustauschvermögen unterscheiden.

In Tabelle 1 wird die neue Kieselsäure (II) hinsichtlich ihres Röntgenbeugungsdiagramms mit drei bekannten Kieselsäuren verglichen, nämlich mit $H_2Si_8O_{17} \cdot xH_2O$ (DE-PS-2 742 912), mit $H_2Si_{14}O_{29} \cdot xH_2O$ (Lagaly et al., Z. Naturforsch. 28 b (1973), 234 - 238) und mit der Kieselsäure SH, die durch Ansäuern der Mineralien Magadiit und Kenyait erhalten wird (Eugster, Science 157 (1967), 1177 - 1180). Die neue Kieselsäure H-SKS-1 zeigt Ähnlichkeiten mit $H_2Si_8O_{17} \cdot xH_2O$ im Röntgenbeugungsdiagramm. Sie unterscheidet sich jedoch von dieser Säure eindeutig im Ionenaustauschvermögen.

Während $H_2Si_8O_{17} \cdot xH_2O$ etwa 250 mmol austauschbare Protonen pro mol $SiO_2$ besitzt, weist die neue Kieselsäure ein deutlich geringeres Austauschvermögen auf. Dieses beträgt maximal 130 mmol $H^+$/mol $SiO_2$ und ist im allgemeinen größer als 83 mmol $H^+$/mmol $SiO_2$. Typisch sind Werte von 83 bis 105 mmol (insbesondere von 88 bis 99 mmol) $H^+$ austauschbar/mol $SiO_2$. Man kann daher eine ideale Zusammensetzung von $H_2Si_{22}O_{45}$ annehmen.

Die erfindungsgemäß hergestellten Produkte lassen sich genauso verwenden wie die bereits bekannten schichtsilikate, z. B. als Adsorbtionsmittel.

**Tabelle 1:** Röntgenbeugungsdiagramme verschiedener Kieselsäuren

| $H_2Si_8O_{17} \cdot xH_2O$ | | $H_2Si_{14}O_{29} \cdot xH_2O$ | | SH | | H-SKS-1 (Beispiel 5) | |
|---|---|---|---|---|---|---|---|
| d ($10^{-8}$ cm) | I/Io | d ($10^{-8}$ cm) | I/Io | d ($10^{-8}$ cm) | I/Io | d ($10^{-8}$ cm) | I/Io |
| 18,4 | 100 | | | | | 18,0 | 33 |
| | | 13,2 | 80 | 13,6 | 100 | | |
| 9,02 | 70 | | | | | 8,93 | 9 |
| 7,25 | 25 | 7,36 | 60 | | | 7,40 | 7 |
| | | | | 6,86 | 45 | | |
| 6,56 | 10 | | | | | | |
| | | | | 6,13 | 12 | | |
| 5,97 | 10 | | | | | | |
| | | 4,67 | 20 | 4,70 | 25 | | |
| 4,44 | 10 | | | | | 4,42 | 7 |
| | | 4,09 | 30 | 4,12 | 35 | | |
| 3,80 | 10 | | | | | 3,86 | 15 |
| 3,68 | 10 | 3,70 | 60 | 3,66 | 30 | 3,69 | 20 |
| | | | | 3,57 | 30 | 3,57 | 25 |
| 3,49 bis 3,30 | 100 | 3,42 | 100 | 3,43 | 75 | 3,41 | 100 |
| | | | | 3,26 | 10 | 3,21 | 20 |
| | | 2,63 | 10 | | | | |
| 2,52 | 10 | | | | | | |

Die Ionenaustauschkapazität der neuen Kieselsäure H-SKS-1 (II) wird durch Titration mit Natronlauge (am besten nach Zugabe einer wäßrigen Natriumchlorid-Lösung) bestimmt. Der Wendepunkt der aufgezeichneten Titrationskurve ergibt im Bereich von pH 8 bis 11 den Äquivalenzwert. Die Titration des entsprechenden Alkalisalzes (I und Ia) mit Salzsäure (Wendepunkt im Bereich von pH 2 bis 5) dient zur Kontrolle und liefert ähnliche Werte. Wenn die gleiche Titration mit Salzsäure mit einem bekannten Magadiitartigen Silikat durchgeführt wird, so liefert es eine wesentlich höhere, für dieses Schichtsilikat aber erwartete Austauschkapazität und bestätigt so die Anwendbarkeit der Untersuchungsmethode.

Das Austauschvermögen kann durch Bestimmung des Glühverlustes (bei über 1000°C) auf die wasserfreie Form umgerechnet werden. Für die kristallwasserfreie neue Kieselsäure (II) entspricht dies einem Ionenaustauschvermögen von 137 bis 212 mmol $H^+$/100 g Kieselsäure, bzw. 137 bis 172 mmol $H^+$/100 g und insbesondere von 145 bis 162 mmol $H^+$/100 g. Auch hier beeinflussen Verunreinigungen des Produkts und die Genauigkeit der Meßmethode die Ergebnisse.

Mit dem gegenüber $H_2Si_8O_{17}$ erhöhten Kondensationsgrad an $SiO_2$ und einem entsprechend verringertem Gehalt an sauren Si-OH-Gruppen sind unterschiedliche chemische und physikalische Eigenschaften verbunden. Während $H_2Si_8O_{17} \cdot xH_2O$ gegen Säuren empfindlich und thermisch instabil ist und daher bei niedrigen Temperaturen aufbewahrt werden soll, gilt dies nicht für die neue Kieselsäure (H-SKS-1). Auch im Verhalten bei der Titration sowie bei der Entwässerung lassen sich geringe Unterschiede feststellen.

Im folgenden soll die halb- bzw. vollkontinuierliche Herstellung des kristallinen Natriumschichtsilikates (I) in einem Rührkessel, bzw. einer Rührkesselkaskade, näher erläutert werden.

Meist wird bei der kontinuierlichen Ausgestaltung des erfindungsgemäßen Verfahrens bei Temperaturen oberhalb 175°C gearbeitet. Wegen des Druckes, der sich über der wäßrigen Reaktionsmischung einstellt, ist ein Autoklav erforderlich. Eine zusätzliche Erhöhung des Druckes durch Zugabe eines Inertgases bringt keine Vorteile. Auch während der Zugabe der Reaktionskomponenten soll die Temperatur der Reaktionsmischung im Bereich von 130 bis 230, insbesondere 160 bis 210°C liegen. Dies ist besonders leicht möglich, wenn die zugegebenen Substanzen bereits aufgeheizt sind. Der Druck im Reaktionsgefäß soll unter 100 bar liegen, im allgemeinen im Bereich von 5 bis 25 bar.

Für das Eindosieren der Reaktionskomponenten in das Reaktionsgefäß sind Pumpen notwendig. Es kann hierfür eine einzige Pumpe ausreichend sein; es ist jedoch auch möglich, einzelne Komponenten getrennt zuzugeben, so daß 2 oder auch 3 Pumpen an verschiedenen Zulaufstellen des Autoklaven erforderlich werden. Es ist bevorzugt, die saure Verbindung (z. B. Schwefelsäure, Phosphorsäure) und die basischen Reaktionskomponenten (in Wasser lösliche Alkalisilikate, Alkalilauge) getrennt einzudosieren, um eine Gelbildung außerhalb des Reaktionsgefäßes zu vermeiden. Im Fall einer Überdosierung der sauren Verbindung kann auch eine Zugabe von Alkalilauge erforderlich werden.

Die Ausgangsprodukte können nacheinander zugegeben werden; Bevorzugt wird jedoch eine gleichzeitige Zugabe. Falls mehrere hintereinander geschaltete Reaktionskessel eingesetzt werden, so ist es vorteilhaft, wenn die Zugabedauer für jede Komponente 10 bis 100 %, insbesondere 20 bis 80 %, der Verweilzeit im ersten Rührkessel beträgt.

Wenn während der Zugabe nicht gleichzeitig Produkt abgeführt wird, steigt der Inhalt im Rührgefäß an. Die

Zugabe muß dann spätestens beendet werden, wenn der maximale Füllstand erreicht ist. Wenn die Komponenten sehr rasch zugegeben werden, muß im Reaktionsgefäß noch weiter gerührt werden, um eine ausreichende Bildung des kristallinen Silikats durch Nachkristallisation zu erreichen. Anschließend wird das Produkt aus dem noch heißen Autoklaven entfernt. Es kann jedoch vorteilhaft sein, diese nachkristallisation in einem weiteren Gefäß oder in weiteren Gefäßen, die gegebenenfalls ebenfalls mit Rührer versehen sind, durchzuführen, so daß sich eine (Rührkessel)-Kaskade ausbildet. Die Dauer der Nachkristallisation soll maximal der 99-fachen, vorzugsweise maximal der 20-fachen und insbesondere (bei hohen Temperaturen oberhalb 200°C) nur der 9-fachen, vorzugsweise weniger als der 4-fachen mittleren Verweilzeit in ersten Rührkessel entsprechen. Dabei ist es möglich, die Nachkristallisation bei Temperaturen durchzuführen, die deutlich niedriger sind als im ersten Rührkessel.

Es ist für die kontinuierliche Reaktionsführung vorteilhaft, den Autoklaven nicht vollständig zu entleeren, sondern stets mindestens teilweise mit Produktmischung gefüllt zu halten, die aus dem auskristallisierten Silikat, der Mutterlauge sowie nicht umgesetzten Ausgangsprodukten besteht. Damit verbleibt ein hoher Anteil an Silikat-Kristallen im Autoklaven, der die weitere Bildung von kristallinem Silikat fördert.

Bei kontinuierlicher Reaktionsführung werden Impfkristalle nur während der Anfahrperiode, (zum Einstellen des Gleichgewichts) zugesetzt. Während der Reaktion soll das Gewichtsverhältnis von Alkalisilikat-Kristallen zu gelöstem $SiO_2$ in der Reaktionsmischung über 0,05, vorzugsweise über 0,1 und insbesondere über 0,2, liegen. Bei vollkontinuierlicher Reaktionsführung werden dabei konstante werte erhalten, die im allgemeinen über 1,0 liegen.

Bei teilkontinuierlicher Reaktionsführung wird ein Mittelwert periodisch über- und unterschritten.

Bei vollkontinuierlicher Reaktionsführung und idealer Durchmischung ist es möglich, daß im Rührkessel, wie auch im ausgetragenen Produkt, wesentlich mehr kristallines als gelöstes Silikat vorhanden ist.

Soll das Produkt aus dem noch unter Druck befindlichen Autoklaven entleert werden, so kann dies mit einem entsprechenden Bodenablaßventil erreicht werden. Wenn keine vollständige Entleerung gewünscht wird, so wird das Produkt vorteilhafterweise über ein Steigrohr entleert, das in die Reaktionsmischung eintaucht und mit einem Ventil verschlossen wird. Durch die Länge des Steigrohres wird festgelegt, wieviel Produkt maximal entfernt werden kann.

Vorteilhafterweise wird das erfindungsgemäße Verfahren vollkontinuierlich betrieben. Neben der kontinuierlichen Zuführung der Ausgangskomponenten ist hierfür ein kontinuierlicher Austrag der Reaktionsprodukte erforderlich. Dies kann beispielsweise mit einem Steigrohr geschehen. Zur Überwachung des Reaktionsgefäßes kann es erforderlich sein, den Füllstand durch eine Füllstandsanzeige oder durch eine Gewichtsmessung des Apparates zu kontrollieren.

Die Reaktionszeit wird sowohl im Chargenbetrieb wie bei kontinuierlicher Führung im allgemeinen aus wirtschaftlichen Gründen so bemessen, daß mindestens 10 % des zugegebenen Alkalisilikats in Alkalischichtsilikat umgewandelt werden. Bei höheren Reaktionstemperaturen sind geringe Reaktionszeiten erforderlich. Bei Temperaturen oberhalb 180°C reichen mitunter Zeiten von weniger als 1 Stunde aus. Es können jedoch auch Reaktionszeiten von mehreren Tagen erforderlich werden. Man kann die von den jeweiligen Reaktionsbedingungen abhängigen erforderlichen Reaktionszeiten durch Röntgenbeugungsdiagramme einzelner Proben ermitteln. Nach dem erfindungsgemäßen Verfahren lassen sich Silikate herstellen, die ausschließlich die für kristalline Schichtsilikate typischen Röntgenreflexe zeigen.

Das Verhältnis von (gebildetem) kristallinen zu (zugegebenem) gelösten Silikat wird in der Hauptsache durch die mittlere Verweilzeit sowie die Zusammensetzung (insbesondere das Molverhältnis $Na_2O/SiO_2$) bestimmt. Eine Erhöhung der mittleren Verweilszeit erhöht den kristallinen Anteil, begünstigt mitunter jedoch auch die Bildung von Nebenprodukten. Aus wirtschaftlichen Gründen kann es sinnvoll sein, bei kürzeren Verweilzeiten sich mit einem geringeren Anteil an kristallinem Produkt zufrieden zu geben.

Für die Isolierung des Schichtsilikats wird die Reaktionsmischung nach der Umsetzung filtriert, mit Wasser oder verdünnter Alkalilauge (entsprechend dem Alkalisilikat) gewaschen und gegebenenfalls getrocknet. Es kann aber auch für manche weitere Verarbeitung vorteilhaft sein, das filterfeuchte Produkt direkt weiterzuverarbeiten, beispielsweise durch Behandlung mit Salzlösungen die Alkaliionen durch andere Kationen auszutauschen.

**Beispiel 1**

Man stellt zunächst eine Reaktionsmischung der molaren Zusammensetzung

$$0{,}303\ Na_2O : 0{,}0052\ Al_2O_3 : SiO_2 : XH_2O$$

dadurch her, daß man 83,5 Gewichtsteile Natronwaßserglas (27 % $SiO_2$, 8,43 % $Na_2O$, 0,24 % $Al_2O_3$) zu 149 Teilen Wasser gibt. Danach wird ein Teil eines filterfeuchten kristallinen Natriumsilikats aus einem früheren Versuch (71 % Gewichtsverlust durch Erhitzen auf 1200°C; für die Berechnung der mölaren Zusammensetzung wurde nur der Wasseranteil berücksichtigt) zugegeben. Man setzt anschließend langsam unter dühren 4,93 Teile 96 %-ige Schwefelsäure zu. Danach hat die Reaktionsmischung folgende mölare Zusammensetzung:

$0,174\ Na_2O : 0,0052\ Al_2O_3 : SiO_2 : 0,129\ Na_2SO_4 : 30\ H_2O$.

Die Reaktionsmischung wird in einem Edelstahl-Autoklaven innerhalb von 1,5 Stunden auf 205°C erhitzt und dann bei bei dieser Temperatur gehalten. Von Zeit zu Zeit werden Proben gezogen und untersucht. Nach 2,5 Std. Erhitzen bei 205°C läßt man langsam abkühlen. Eine zu diesem Zeitpunkt gezogene Probe zeigt nach Trocknen bei 120°C bei Netzebenenabständen von $d_1 = 20,5 \cdot 10^{-8}$ cm einen Reflex der relativen Intensität 56, bei $d_2 = 15,5 \cdot 10^{-8}$ cm keinen Reflex, bei $d_3 = 3,34 \cdot 10^{-8}$ cm einen Reflex der relativen Intensität 46 und bei $d_4 = 3,44 \cdot 10^{-8}$ cm einen Reflex der relativen Intensität 100. Nach dem Abkühlen wird die Reaktionsmischung filtriert, mit Wasser gewaschen und auf einer Nutsche trocken gesaugt. Das filterfeuchte Produkt weist einen Glühverlust von 55 % auf. Das an der Luft kurzzeitig getrocknete Produkt wird thermogravimetrisch untersucht. Bis zu einer Temperatur von etwa 140°C ist ein Gewichtsverlust von 43 % eingetreten. Bis ca. 1000°C wird keine weitere wesentliche Gewichtsabnahme beobachtet. Das bei 120°C bis zur Gewichtskonstanz getrocknete Produkt (I) zeigt folgende elementar-analytische Zusammensetzung:

3,8 % Na, 0,24 % Al, 41,5 % Si und 0,003 % Fe.

Es läßt sich daraus ein molares $SiO_2/Na_2O$-Verhältnis von 17,9 errechnen. Das molare $SiO_2/Al_2O_3$-Verhältnis von 332 zeigt, daß trotz der Anwesenheit von gelöstem $Al_2O_3$ in der Reaktionsmischung dieses nur in sehr geringen Mengen in das Endprodukt eingebaut wird. Das Röntgenbeugungsdiagramm des an der Luft getrockneten Natriumsilikats (I) ist in Tabelle 2 aufgeführt.

**Tabelle 2**

| Kenyait | | $K_2Si_8O_{17}$ | | $SiO_2$-X | | $SiO_2$ ($X_2$-Phase) | | Na-SKS-1 (Beispiel 1) | |
|---|---|---|---|---|---|---|---|---|---|
| 19,7 | 100 | 20,1 | 100 | 18,0 | 20 | 19,3 | 90 | 20,5 | 56 |
| 9,93 | 50 | 10,2 | 30 | 8,93 | 10 | 9,7 | 20 | 10,0 | 11 |
| 7,78 | 2 | 7,31 | 15 | 7,32 | 12 | 7,25 | 10 | 7,31 | 4 |
| 6,62 | 6 | 6,68 | 15 | | | | | | |
| | | | | 6,30 | 16 | 6,38 | 15 | | |
| 5,64 | 8 | 5,45 | 15 | | | | | | |
| 5,14 | 12 | | | 5,11 | 12 | | | | |
| 4,97 | 35 | | | | | 5,03 | 10 | 4,99 | 13 |
| | | | | | | 4,83 | 10 | | |
| 4,69 | 30 | | | | | | | | |
| 4,47 | 6 | | | | | | | | |
| | | | | 4,37 | 6 | | | | |
| | | 4,29 | 30 | | | | | | |
| | | 4,10 | 40 | | | | | | |
| 3,95 | 10 | | | | | | | | |
| | | 3,82 | 15 | | | 3,86 | 10 | | |
| 3,75 | 6 | | | | | | | | |
| 3,64 | 20 | 3,66 | 15 | 3,64 | 6 | | | 3,64 | 22 |
| 3,53 | 20 | | | | | | | 3,52 | 31 |
| 3,43 | 85 | 3,43 | 90 | 3,42 | 100 | 3,42 | 100 | 3,44 | 100 |
| 3,32 | 45 | | | | | | | 3,34 | 46 |
| 3,20 | 55 | 3,19 | 60 | | | 3,20 | 40 | 3,21 | 53 |
| 2,93 | 14 | 2,91 | 40 | | | 2,94 | 10 | 2,94 | 16 |
| | | | | | | 2,88 | 10 | | |
| 2,83 | 12 | | | | | | | | |
| 2,65 | 4 | 2,64 | 15 | | | | | | |

**Beispiel 2**

Zu Produkt aus Beispiel 1 wird so viel Salzsäure bei Raumtemperatur allmählich zugegeben, bis ein pH-Wert von 2,0 erreicht ist. Die Reaktionsmischung wird ca. 15 Minuten gerührt, filtriert, der Filterrückstand erneut mit verdünnter Salzsäure bis pH 2 versetzt. Die entstandene kristalline Kieselsäure wird filtriert, zweimal mit Wasser gründlich gewaschen, erneut filtriert und trockengesaugt. Der Glühverlust des filterfeuchten Produkts beträgt 34,9 %. 100 g der feuchten Kieselsäure werden mit 190 g einer 5 %-igen NaCl-Lösung versetzt und

anschließend mit 1 m NaOH titriert. Tabelle 7 zeigt die Titrationswerte. Bei der graphischen Darstellung wird aus dem Wendepunkt der Kurve bei pH 9,5 ein Äquivalenzwert von 155 meq/100 g geglühtes Produkt ermittelt. Daraus wird ein Ionenaustauschvermögen von etwa 94 mmol $H^+$/mol $SiO_2$, entsprechend einem $SiO_2$ : $2H^+$ - bzw. $SiO_2$ : $Na_2O$-Verhältnis von 21 : 1 bestimmt.

**Beispiel 3**

Das Produkt von Beispiel 1 wird zweimal mit 4 %-iger Salzsäure bei 80°C 15 Minuten lang extrahiert. Das Röntgenbeugungsdiagramm des filterfeuchten Produktes zeigt Tabelle 3. Die Untersuchung der differentiellen Thermoanalyse ergibt eine ausgeprägte Umwandlung bei etwa 120°C und eine weit weniger ausgeprägte endotherme Umwandlung bei etwa 1180°C.

**Tabelle 3**

| d ($10^{-8}$ cm) | I/Io |
|---|---|
| 16,1 | 19 |
| 7,89 | 5 |
| 5,21 | 12 |
| 3,85 | 15 |
| 3,53 (S) | 27 |
| 3,39 | 100 |
| 3,22 (S) | 17 |

S = Schulter

**Beispiel 4**

Das filterfeuchte produkt von Beispiel 3 wird mit einem Überschuß an Natronlauge versetzt. Man rührt 1 Stunde, laugt ab und wäscht mit wenig Wasser. Das Röntgenbeugungsdiagramm des bei 120°C getrockenten Produkts ist in Tabelle 4 aufgeführt.

**Tabelle 4**

| d ($10^{-8}$ cm) | I/Io |
|---|---|
| 19,8 | 62 |
| 9,87 | 13 |
| 7,31 | 5 |
| 6,37 | 3 |
| 4,98 | 11 |
| 4,69 | 10 |
| 4,27 | 9 |
| 3,66 | 19 |
| 3,50 | 31 |
| 3,44 | 100 |
| 3,35 | 44 |
| 3,33 | 44 |
| 3,21 | 47 |
| 2,94 | 8 |

**Beispiel 5**

10 g des Produkts von Beispiel 1, das zuvor kurzzeitig an der Luft getrocknet worden war und einen Glühverlust von 44,2 % hat, werden zu 190 g Wasser gegeben und mit 0,5 molarer $H_2SO_4$ titriert. Nach jeder Zugabe wird so lange gewartet, bis der pH-Wert bis auf zwei Stellen hinter dem Komma für zumindest 2 min konstant ist. Die Dauer einei Titration beträgt dadurch mehrere Stunden. Tabelle 5 zeigt die Titrationswerte. Mit Hilfe einer graphischen Darstellung läßt sich aus dem Wendepunkt der Kurve bei pH 4,5 ein Äquivalenzwert von 150 mmol $Na^+$/100 g geglühtes Produkt ermitteln. Es wird ein Ionenaustauschvermögen von etwa 95 mmol $Na^+$/mol $SiO_2$, entsprechend einem $SiO_2$ : $Na_2O$- bzw. $SiO_2$ : $2H^+$-Verhältnis (austauschbare Protonen) von 21 : 1 bestimmt. Das Röntgenbeugungsdiagramm nach der Titration mit Säure und Trocknung an Luft ist in Tabelle 1 dargestellt.

**Tabelle 5**

| ml 0,5 m $H_2SO_4$ | pH | mmol (ausgetauschte) $Na^+$-Ionen/ 100 g geglühtes Produkt |
|---|---|---|
| 0,00 | 10,22 | 0,0 |
| 1,00 | 9,25 | 17,9 |
| 2,00 | 8,32 | 35,8 |
| 3,00 | 7,52 | 53,8 |
| 4,00 | 7,09 | 71,7 |
| 5,00 | 6,85 | 89,6 |
| 5,50 | 6,73 | 98,6 |
| 6,00 | 6,66 | 107,5 |
| 6,50 | 6,49 | 116,5 |
| 7,00 | 6,36 | 125,5 |
| 7,50 | 6,06 | 134,4 |
| 8,00 | 5,44 | 143,4 |
| 8,25 | 4,92 | 147,9 |
| 8,50 | 3,58 | 152,4 |
| 8,75 | 3,18 | 156,8 |
| 9,00 | 2,92 | 161,3 |
| 9,25 | 2,79 | 165,8 |
| 9,50 | 2,65 | 170,3 |
| 9,75 | 2,59 | 174,8 |
| 10,00 | 2,52 | 179,2 |
| 10,25 | 2,44 | 183,7 |
| 10,50 | 2,39 | 188,2 |
| 10,75 | 2,34 | 192,7 |
| 11,00 | 2,30 | 197,2 |
| 11,50 | 2,22 | 206,1 |
| 12,00 | 2,16 | 215,1 |

**Beispiel 6**

Die Titration von Beispiel 5 wird wiederholt. Anstelle des Wassers werden jedoch 190 g 5 %-ige NaCl-Lösung verwendet. Tabelle 6 zeigt die Titrationswerte. Bei der graphischen Darstellung wird aus dem Wendepunkt der Kurve bei pH 3,75 ein Äquivalenzwert von 145 mmol/100 g geglühtes Produkt ermittelt. Daraus läßt sich ein Ionenaustauschvermögen von etwa 91 mmol $Na^+$/mol $SiO_2$, entsprechend einem $SiO_2$ : $Na_2O$- bzw. $SiO_2$ : $2H^+$-Verhältnis von 22 : 1 errechnen.

**Tabelle 6**

| ml 0,5 m $H_2SO_4$ | pH | mmol (ausgetauschte) $Na^+$-Ionen/ 100 g geglühtes Produkt |
|---|---|---|
| 0,00 | 8,87 | 0,0 |
| 0,5 | 8,01 | 8,9 |
| 1,0 | 7,49 | 17,8 |
| 1,5 | 7,00 | 26,6 |
| 2,0 | 6,63 | 35,5 |
| 2,5 | 6,16 | 44,4 |
| 3,0 | 6,14 | 53,3 |
| 3,5 | 5,83 | 62,1 |
| 4,0 | 5,66 | 71,0 |
| 4,5 | 5,47 | 79,9 |
| 5,0 | 5,36 | 88,8 |
| 5,5 | 5,29 | 97,7 |
| 6,0 | 5,22 | 106,5 |
| 6,5 | 5,18 | 115,4 |
| 7,0 | 5,08 | 124,3 |
| 7,5 | 4,84 | 133,2 |
| 8,0 | 4,20 | 142,0 |
| 8,5 | 2,96 | 150,9 |
| 9,0 | 2,53 | 159,8 |
| 9,5 | 2,30 | 168,7 |

**Tabelle 7**

| ml 1 m NaOH | pH | mmol (ausgetauschte) Protonen/ 100 g gegluhtes Produkt |
|---|---|---|
| 0,00 | 3,26 | 0,0 |
| 1,00 | 4,98 | 15,4 |
| 2,00 | 5,40 | 30,7 |
| 3,00 | 5,60 | 46,1 |
| 4,00 | 5,68 | 61,4 |
| 5,00 | 5,84 | 76,8 |
| 6,00 | 6,19 | 92,1 |
| 6,50 | 6,46 | 99,8 |
| 7,00 | 6,76 | 107,5 |
| 7,50 | 7,08 | 115,2 |
| 8,00 | 7,37 | 122,9 |
| 8,50 | 7,76 | 130,5 |
| 9,00 | 8,25 | 138,2 |
| 9,25 | 8,55 | 142,0 |
| 9,50 | 8,77 | 145,9 |
| 9,75 | 9,10 | 149,7 |
| 10,10 | 9,60 | 155,1 |
| 10,25 | 9,78 | 157,4 |
| 10,50 | 9,93 | 161,2 |
| 10,75 | 10,30 | 165,1 |
| 11,00 | 10,58 | 168,9 |
| 11,25 | 10,75 | 172,8 |
| 11,50 | 10,95 | 176,6 |
| 11,75 | 11,09 | 180,4 |
| 12,00 | 11,21 | 184,3 |
| 12,25 | 11,29 | 188,1 |
| 12,50 | 11,36 | 192,0 |
| 13,00 | 11,54 | 199,6 |
| 13,50 | 11,63 | 207,3 |
| 14,00 | 11,70 | 215,0 |
| 15,00 | 11,84 | 230,3 |
| 16,00 | 11,88 | 245,7 |

**Beispiel 7**

Man gibt 141,44 Gewichtsteile gefällte Kieselsäure (Merck AG, Darmstadt, Best. Nr. 657; Glühverlust ca. 15 %) zu 1479 Gew.-Teilen Wasser und setzt anschließend 32 Gew.-Teile NaOH zu. Das entspricht einer molaren Zusammensetzung von 0,20 $Na_2O$ : $SiO_2$ : 42 $H_2O$.

Die Mischung wird in einem Edelstahl-Autoklaven, der noch Reste an kristallinem Natriumsilikat von einem entsprechenden früheren Versuch enthält, auf 200°C aufgeheizt und gerührt. Die Kieselsäure löst sich unter Bildung von Natriumsilikat auf.

Nach insgesamt 4 Stunden Reaktionszeit wird die Reaktionsmischung filtriert, gewaschen und bei 100°C getrocknet. Das Röntgenbeugungsspektrum entspricht etwa dem von Tabelle 2 (starke Bande bei $3{,}44 \cdot 10^{-8}$ cm).

Durch Titration mit 0,5 m $H_2SO_4$ wird eine Ionenaustausch-Kapazität von etwa 142 mmol $Na^+$/100 g geglühtes Produkt bestimmt. Hieraus errechnet sich eine Bruttozusammensetzung $Na_2Si_xO_{2x+1}$ mit x = 22,4 und ein Atomverhältnis Na/Si von 0,089.

**Beispiel 8** (Vergleichsbeispiel)

In den beiden folgenden Beispielen sollen den bisher beschriebenen erfindungsgemäßen Silikaten Magadiitartige Schichtsilikate gegenübergestellt werden. Beispiel 8 soll zeigen, daß durch die Zugabe von Impfkristallen die Kistallisation des Natriumsilikats stark beeinflußt wird.

Letzteres wird aus einem Reaktionsansatz mit gleicher Eduktzusammensetzung wie in Beispiel 1 hergestellt. Der Raktionsmischung werden Impfkristalle eines Magadiitartigen Silikats aus einem früheren Versuch zugesetzt. Die Reaktionsmischung wird 19 Stunden bei 165°C gerührt, nach dem Erkalten filtriert, mit Wasser gewaschen und auf einer Nutsche trockengesaugt. 10 g der Mutterlauge der Reaktionsmischung, mit 250 ml Wasser verdünnt, haben einen pH-Wert von 10,4. Das Röntgenbeugungsdiagramm des an der Luft kurzzeitig getrockneten Produktes zeigt Tabelle 8. Das filterfeuchte Produkt, welches beim Glühen (über 1000°C) 61,3 % seines Gewichtes verliert, wird mit Schwefelsäure analog Beispiel 5 titriert. Tabelle 9 zeigt die Titrationswerte. Bei der graphischen Darstellung wird aus dem Wendepunkt der Kurve bei pH 5,0 ein Äquivalenzwert von 215 meq/100 g geglühtes Produkt ermittelt. Unter Einbezichung der aus der Titration ermittelten Zusammensetzung beim $SiO_2$-Gehalt der Probe wird ein Ionenaustauschvermögen von 138 mmol $Na^+$/mol $SiO_2$, entsprechend einem $SiO_2$ : $Na_2O$-Verhältnis von 14,5 : 1 ermittelt.

**Tabelle 8**

| d ($10^{-8}$ cm) | I/Io |
|---|---|
| 15,5 | 100 |
| 7,76 | 13 |
| 5,15 | 20 |
| 4,69 | 8 |
| 4,44 | 10 |
| 4,23 | 7 |
| 3,63 | 18 |
| 3,54 | 24 |
| 3,44 | 79 |
| 3,30 | 49 |
| 3,14 | 65 |
| 2,81 | 11 |
| 2,58 | 8 |
| 2,34 | 6 |

**Tabelle 9**

| ml 0,5 m $H_2SO_4$ | pH | mmol (ausgetauschte) $Na^+$-Ionen/ 100 g geglühtes Produkt |
|---|---|---|
| 0,00 | 10,59 | 0,0 |
| 1,00 | 9,81 | 25,8 |
| 2,00 | 9,13 | 51,7 |
| 3,00 | 7,28 | 77,5 |
| 4,45 | 6,73 | 115,0 |
| 5,00 | 6,61 | 129,2 |
| 6,00 | 6,54 | 155,0 |
| 7,00 | 6,40 | 180,8 |
| 8,00 | 6,01 | 206,7 |
| 8,50 | 3,97 | 219,6 |
| 9,00 | 2,95 | 232,5 |
| 9,25 | 2,76 | 239,0 |
| 9,50 | 2,65 | 245,4 |
| 9,75 | 2,55 | 251,9 |
| 10,00 | 2,48 | 258,2 |
| 10,50 | 2,34 | 271,7 |
| 11,00 | 2,16 | 297,1 |
| 12,00 | 2,09 | 310,0 |
| 12,50 | 2,03 | 322,9 |
| 13,00 | 1,98 | 335,8 |

**Beispiel 9** (Vergleichsbeispiel)

100 g feuchtes Produkt aus Beispiel 8 werden zu 200 ml 5 %-iger Salzsäure gegeben und 1,25 Stunden bei Raumtemperatur gerührt. Das Produkt wird filtriert, erneut zu einer gleichen Menge Salzsäure gegeben, 25 Stunden gerührt, filtriert und zweimal gründlich mit Wasser gewaschen, indem das Produkt mit Wasser gerührt wird und bei der Filtration gewaschen wird. (Röntgenspektrum des an der Luft kurzzeitig getrockneten Produktes in Tabelle 10). Anschließend wird das Produkt trockengesaugt. 10,0 g (Glühverlust 57,1 %) werden zu 190 ml 5 %-ige NaCl-Lösung gegeben und anschließend mit 1 m NaOH titriert. Tabelle 11 zeigt die Titrationswerte. Bei der graphischen Darstellung wird aus dem Wendepunkt der kurve bei pH 8,3 ein Äquivalenzwert von 235 mmol $H^+$/100 g geglühtes Produkt ermittelt. Daraus wird ein Ionenaustauschvermögen von etwa 144 meq/mol $SiO_2$, entsprechend einem $SiO_2$ : $2H^+$- bzw. $SiO_2$ : $Na_2O$-Verhältnis von 13,9 : 1 bestimmt.

Bei natürlichem wie auch synthetischem Magadiit wird eine elementaranalytische Zusammensetzung von $SiO_2$ : $Na_2O$ von 13,4 bis 14,4 ermittelt (Lagaly et al., Am. Mineral., 60, 642 - 649 (1975)). Das durch das Ionenaustauschvermögen des Natriumsalzes von Beispiel 8, bzw. der freien Säure von Beispiel 9 ermittelte Verhältnis von 14,5 : 1 bzw. 3,9 : 1 stimmt mit diesen Werten gut überein.

**Tabelle 10**

| d ($10^{-8}$ cm) | I/Io |
|---|---|
| 12,1 | 11 |
| 7,42 | 5 |
| 5,55 | 6 |
| 4,35 | 8 |
| 3,69 | 17 |
| 3,62 | 18 |
| 3,62 | 18 |
| 3,43 | 100 |
| 3,25 | 16 |
| 3,21 | 16 |
| 3,18 | 15 |

**Tabelle 11**

| ml 1 m NaOH | pH | mmol (ausgetauschte) Protonen/ 100 g geglühtes Produkt |
|---|---|---|
| 0,00 | 2,21 | 0,0 |
| 1,00 | 4,40 | 23,3 |
| 2,00 | 5,26 | 46,7 |
| 3,00 | 5,44 | 70,0 |
| 4,00 | 5,55 | 93,3 |
| 5,00 | 5,62 | 116,6 |
| 6,00 | 5,69 | 140,0 |
| 7,00 | 5,82 | 163,3 |
| 7,25 | 5,89 | 169,1 |
| 7,50 | 5,88 | 174,9 |
| 7,75 | 5,91 | 180,8 |
| 8,00 | 5,99 | 186,6 |
| 8,25 | 6,12 | 192,4 |
| 8,50 | 6,20 | 198,3 |
| 8,75 | 6,44 | 204,1 |
| 9,00 | 6,57 | 210,0 |
| 9,25 | 6,82 | 215,8 |
| 9,50 | 7,17 | 221,6 |
| 9,75 | 7,55 | 227,4 |
| 10,00 | 8,05 | 233,3 |
| 10,25 | 8,70 | 239,1 |
| 10,50 | 9,15 | 244,9 |
| 10,75 | 9,51 | 250,8 |
| 11,00 | 9,88 | 256,6 |
| 11,25 | 10,15 | 262,4 |
| 11,50 | 10,50 | 268,3 |

**Patentansprüche**

1. Kristalline Kieselsäure mit Schichtstruktur der Bruttozusamnensetzung $H_2Si_xO_{2x+1}$ wobei x eine Zahl zwischen 15 und 24 bedeutet, mit einer sehr starken ersten Linie im Röntgenbeugungsdiagramm bei $(3{,}42 \pm 0{,}1) \cdot 10^{-8}$ cm sowie einer weiteren Linie bei $(18 \pm 4) \cdot 10^{-8}$ cm, deren Intensität höchstens 75 % der Intensität der ersten Linie beträgt und die eine titrierbare Acidität von 83 bis 130 mmol $H^+$/mol $SiO_2$ aufweist.

2. Kristallines Natriumsalz der Kieselsäure gemäß Anspruch 1, das im Röntgenbeugungsdiagramm zumindest eine sehr starke Linie bei $(3{,}42 \pm 0{,}15) \cdot 10^{-8}$ cm und eine weiter Linie bei $(20 \pm 2) \cdot 10^{-8}$ cm, deren Intensität höchstens 75 % der Intensität der ersten Linie beträgt, aufweist und eine durch Titration mit Schwefelsäure bestimmbare Austauschkapazität von 83 bis 130 mmol Natrium/mol $SiO_2$ hat.

3. Natriumsalz gemäß Anspruch 2, dadurch gekennzeichnet, daß die Ionenaustauscherkapazität 83 bis 105 mmol Natrium/mmol $SiO_2$ beträgt.

4. Verfahren zur Herstellung eines kristallinen Natriumsilikats mit Schichtstruktur und einer Ionenaustausch-Kapazität von 83 - 130 mmol $Na^+$/mol $SiO_2$, dadurch gekennzeichnet, daß man eine wäßrige Natriumsilikat enthaltende Reaktionsmischung mit einem molaren Verhältnis von $SiO_2/Na_2O$ von 3,9 : 1 bis 15 : 1 und einem Molverhältnis $H_2O/(Na_2O + SiO_2)$ von 3 : 1 bis 80 : 1, die 0,01 bis 30 Gew.-% an Impfkristallen des gewünschten kristallinen Natriumsilikats, bezogen auf den $SiO_2$-Anteil der eingesetzten Reaktionsmischung, enthält, bereitet, sie auf Temperaturen von 160 bis 250°C aufheizt, man die Reaktion mindestens solange durchführt, daß eine abgesaugte und bei 120°C getrocknete Probe im Röntgenbeugungsdiagramm ein Verhältnis der Intensität des Reflexes bei dem Netzebenenabstand $d_1 = (20 \pm 2) \cdot 10^{-8}$ cm, zu der Intensität des gegebenenfalls vorhandenen Reflexes bei dem Netzebenenabstand $d_2 = (15{,}5 \pm 1{,}5) \cdot 10^{-8}$ cm von mindestens 3 : 1 aufweist und man die Reaktion beendet, bevor die Intensität des Reflexes bei dem Netzebenenabstand $d_2 = (3{,}34 \pm 0{,}04) \cdot 10^{-8}$ cm die Intensität des Reflexes bei dem Netzebenenabstand $d_4$ $(3{,}44 \pm 0{,}04) \cdot 10^{-8}$ cm erreicht oder überschreitet.

5. Verfahren nach Anspruch 4, dadurch gekennzeichnet, daß die eingesetzte Reaktionsmischung ein Molverhältnis $SiO_2/Na_2O$ von 5 : 1 bis 10 : 1 aufweist.

6. Verfahren zur Herstellung der kristallinen Kieselsäure gemäß Anspruch 1, dadurch gekennzeichnet, daß man ein Alkalisalz der kristallinen Kieselsäure mit verdünnter Mineralsäure behandelt und man die entstandene Kieselsäure abfiltriert.

## Claims

1. A crystalline silicic acid which has a sheet structure and an overall composition $H_2Si_xO_{2x+1}$, wherein x denotes a number between 15 and 24, which exhibits a very strong first line in the X-ray diffraction pattern at $(3.42 \pm 0.1) \cdot 10^{-8}$ cm and a further line at $(18 \pm 4) \cdot 10^{-8}$ cm, the intensity of which is not more than 75 % of the intensity of the first line, and which has a titratable acidity of 83 to 130 mmol of $H^+$/mol of $SiO_2$.

2. A crystalline sodium salt of the silicic acid as claimed in claim 1, which exhibits, in the X-ray diffraction pattern, at least one very strong line at $(3.42 \pm 0.15) \cdot 10^{-8}$ cm and a further line at $(20 \pm 2) \cdot 10^{-8}$ cm, the intensity of which is not more than 75 % of the intensity of the first line, and has an exchange capacity, which can be determined by titration with sulfuric acid, of 83 to 130 mmol of sodium/mol of $SiO_2$.

3. A sodium salt as claimed in claim 2, wherein the ion exchange capacity is 83 to 105 mmol of sodium/mmol of $SiO_2$.

4. A process for the preparation of a crystalline sodium silicate having a sheet structure and an ion exchange capacity of 83 - 130 mmol of $Na^+$/mol of $SiO_2$, wherein an aqueous reaction mixture which contains sodium silicate, has a molar ratio of $SiO_2/Na_2O$ of 3.9 : 1 to 15 : 1 and a molar ratio $H_2O/(Na_2O + SiO_2)$ of 3 : 1 to 80 : 1 and contains 0.01 to 30 % by weight, relative to the amount of $SiO_2$ in the reaction mixture employed, of seed crystals of the desired crystalline sodium silicate is prepared, this reaction mixture is heated to temperatures of 160 to 250°C, the reaction is carried out at least until, in the X-ray diffraction pattern of a sample filtered off under suction and dried at 120°C, the ratio of the intensity of the reflection at the inter-planar spacing $d_1 = (20 \pm 2) \cdot 10^{-8}$ cm to the intensity of any reflection present at the interplanar spacing $d_2 = (15.5 \pm 1.5) \cdot 10^{-8}$ cm is at least 3 : 1, and the reaction is terminated before the intensity of the reflection at the interplanar spacing $d_3 = (3.34 \pm 0.04) \cdot 10^{-8}$ cm reaches or exceeds the intensity of the reflection at the interplanar spacing $d_4 = (3.44 \pm 0.04) \cdot 10^{-8}$ cm.

5. The process as claimed in claim 4, wherein the reaction mixture employed has a molar ratio $SiO_2/Na_2O$ of 5 : 1 to 10 : 1.

6. A process for the preparation of the crystalline silicic acid as claimed in claim 1, wherein an alkali metal salt of the crystalline silicic acid is treated with a dilute mineral acid, and the silicic acid obtained is filtered off.

## Revendications

1. Acide silicique cristallin, à structure lamellaire, ayant la composition brute $H_2Si_xO_{2x+1}$, où x est un nombre compris entre 15 et 24, présentant une première raie très intense sur le diagramme de diffraction aux rayons X à $(3,42 \pm 0,1) \cdot 10^{-8}$ cm et une autre raie à $(18 \pm 4) \cdot 10^{-8}$ cm, dont l'intensité est au plus égale à 75 % de l'intensité de la première raie, et qui présente une acidité titrable de 83 à 130 mmole $H^+$/mole $SiO_2$.

2. Sel de sodium cristallin de l'acide silicique selon la revendication 1, lequel présente, sur le diagramme de diffraction aux rayons X, au moins une raie très intense à $(3,42 \pm 0,15) \cdot 10^{-8}$ cm et une autre raie à $(20 \pm 2) \cdot 10^{-8}$ cm, dont l'intensité est au plus égale à 75 % de l'intensité de la première raie, et qui présente une capacité d'échange, déterminable par titrage à l'acide sulfurique, de 83 à 130 mmoles de sodium/mole de $SiO_2$.

3. Sel de sodium selon la revendication 2, caractérisé en ce que la capacité d'échange d'ions est de 83 à 105 mmoles de sodium/mmole de $SiO_2$.

4. Procédé pour la préparation d'un silicate de sodium cristallin à structure lamellaire, présentant une capacité d'échange d'ions de 83 à 130 mmoles $Na^+$/mole $SiO_2$, caractérisé en ce qu'on prépare un mélange réactionnel contenant un silicate de sodium aqueux, présentant un rapport en moles $SiO_2/Na_2O$ de 3,9 : 1 à 15 : 1 et un rapport en moles $H_2O/(Na_2O + SiO_2)$ de 3 : 1 à 80 : 1, ce mélange contenant de 0,01 à 30 % en poids de germes de cristallisation du silicate de sodium cristallin recherché, par rapport à la quantité de $SiO_2$ se trouvant dans le mélange réactionnel utilisé; qu'on chauffe ce mélange réactionnel à des températures de 160 à 250°C; qu'on met en oeuvre la réaction au moins jusqu'à ce qu'un échantillon, séparé par aspiration et séché à 120°C, présente sur le diagramme de diffraction aux rayons X un rapport au moins égal à 3 : 1 entre l'intensité de la réflexion pour un écartement des plans réticulaires $d_1 = (20 \pm 2) \cdot 10^{-8}$ cm et l'intensité de la réflexion éventuelle correspondant à un écartement des plans réticulaires $d_2 = (15,5 \pm 1,5) \cdot 10^{-8}$ cm, et qu'on termine la réaction avant que l'intensité de la réflexion, pour l'écartement des plans réticulaires $d_3 = (3,34 \pm 0,04) \cdot 10^{-8}$ cm n'atteigne ou ne dépasse l'intensité de la réflexion correspondant à l'écartement des plans réticulaires $d_4 = (3,44 \pm 0,04) \cdot 10^{-8}$ cm.

5. Procédé selon la revendication 4, caractérisé en ce que le mélange réactionnel utilisé a un rapport en moles $SiO_2/Na_2O$ compris entre 5 : 1 et 10 : 1.

6. Procédé de préparation de l'acide silicique cristallin selon la revendication 1, caractérisé en ce qu'on traite un sel de métal alcalin de l'acide silicique cristallin à l'aide d'un acide minéral dilué, et qu'on sépare par filtration l'acide silicique obtenu.